Europäisches Patentamt

European Patent Office

Office européen des brevets

(19)

(11) Publication number : **0 497 506 A2**

## (12) EUROPEAN PATENT APPLICATION

(21) Application number : **92300593.8**

(22) Date of filing : **23.01.92**

(51) Int. Cl.⁵ : **B32B 27/18**, G09F 13/00

(30) Priority : **31.01.91 JP 29119/91**

(43) Date of publication of application :
**05.08.92 Bulletin 92/32**

(84) Designated Contracting States :
**AT BE CH DE DK ES FR GB GR IT LI LU NL SE**

(71) Applicant : **ROHM AND HAAS COMPANY**
**Independence Mall West**
**Philadelphia Pennsylvania 19105 (US)**

(72) Inventor : **Ludwig, Edward Garland, Jr.**
**250 Chemin de Sartoux**
**F-06370 Mouans-Sartoux (FR)**
Inventor : **Post, Robert Lee**
**980 Almshouse Road**
**Ivyland, Pennsylvania 18974 (US)**

(74) Representative : **Angell, David Whilton et al**
**ROHM AND HAAS (UK) LTD. European**
**Operations Patent Department Lennig House**
**2 Mason's Avenue**
**Croydon, Surrey, CR9 3NB (GB)**

(54) **Multilayer blankout signs.**

(57)    A novel light diffusing resin (material) has been invented which combines excellent light diffusing properties with high light transmission. The combination of properties is possible because the material does not significantly backscatter light. Also, the material exhibits good contact clarity. This light diffusing material is an excellent choice for use in blankout signs. A non-reflecting translucent white sheet is placed behind a transparent bronze overlay. The message is seen only when the sign is illuminated.

Fig.3.

EP 0 497 506 A2

EP 0 497 506 A2

This invention relates is concerned with multilayer blankout signs. Such signs are well known and established in the industry.

There are predominately two types of blankout signs. Both consist of two material layers, typically a transparent bronze over translucent white. Usually acrylic material is used due to non-yellowing characteristics but any clear or translucent sheet material can be used. The first type of blankout sign has a message painted on a translucent white sheet which is then covered by a transparent bronze sheet. This message becomes easily legible when the sign is backlit. When the sign is not backlit, the message may be partially and preferably obscured. An example is a sign at airport gates which is dark and messageless when not illuminated, but when illuminated, shows a message such as "Now Boarding".

The second type of blankout sign does not contain a message but rather is simply used to show a different color when the sign is lit than that not lit. An example is shaped letters for the signboard over the entrance to a store. The letters appear dark in color during the day and light in color at night, thus contrasting with the environment and being made more noticeable.

While blankout signs are most typically transparent bronze over translucent white, any transparent color over any translucent color is useful. Obviously, a denser color of the transparent sheet will give the better hiding of the second sheet and or message during the day. Likewise, the high light transmission of the diffusing sheet will give a brighter sign when backlit.

EP-A-0269324 and EP-A-0342283 disclose excellent light transmitting plastic sheet which is translucent. This sheet consists of a synthetic resin matrix containing light diffusing polymer particles. This has many applications due to its light diffusing property, in other words, its non-reflecting, non-backscattering property. These EP applications disclose many usages of this light diffusing material but neither teach nor suggest the use in blankout signs.

There are a few standard methods which are currently employed to produce blankout signs. In Fig. I which follows depicting a standard translucent balnkout sign, the known method of using a transparent bronze sheet over translucent white sheet is shown. In this case, the white sheet has to be front painted because the material has poor contact clarity and so backpainting is not viable. The paint and the translucent white sheet both backscatter light and so the message is difficult to hide in bright ambient light such as sunlight.

Another method is to use transparent bronze sheet over a translucent clear sheet. In this case, the message can be backpainted on the translucent clear sheet. However, the back of the translucent clear sheet must then be fogged with white paint (or whatever background color is chosen) to hide the appearance of the light source even when not lit. Again, the paint backscatters light to make hiding difficult in bright ambient light locations. The paint has poor light transmission, making the sign less bright when lit. Painting or fogging the back surface of the translucent clear sheet represents an extra processing step.

Co-extruded materials (a transparent color over a different translucent clear sheet) offers the advantage of having to work with only one sheet. Such an example is shown in Fig. II, which represents a known dual layer translucent blankout sign using a two0layer coextruded sheet and having a message painted on the back surface of a clear sheet including a white fogging layer overpainted on the message on th translucent clear sheet. In Fig. II transparent bronze layer (1) is co-extruded with translucent clear layer (2), backpainted (3), and then fogged (4) with a layer of paint. A significant advantage is realized with this technology when shaped, or when three dimensional signs are constructed. Without co-extrusion, each sheet of the two layers must be shaped or thermoformed and then fitted together, requiring an added processing step. In the case of co-extrusion, translucent material must be used for the second layer since backpainting or fogging is necessary. However, the back surface of the translucent second layer must be fogged with paint to hide the light source, resulting in the same disadvantages discussed earlier.

Preferring to Figure I, (1) represents a transparent acrylic sheet or which may or may not contain a bronze or blue or other coloring agent. The acrylic sheet also sometimes referred to as "white sheet (3) is spaced from sheet (1) preferably translucent acrylic sheet on which a message (2) is shown.

In another version of known signboard art, Figure II shows a signboard using a back-lighted two-layer extruded thermoplastic or thermoset sheet. The top layer (1) is a transparent sheet which may or may not contain an appropriate coloring agent. The middle layer or layer (2) is a transparent thermoplastic or thermoset sheet containing light diffusing polymer particles integrally formed with top layer (1). On the rear of middle layer (2) a message (3) is backpainted and a white fogging material 4 layered over the back of message 3. An illuminating source 5 is provided so that the message 3 can be viewed when light rays (6) from the illuminating source (5) is activated. The illuminating source may be continuous or intermittent.

Figure III represents a multilayer blankout sign of the present invention. The blankout sign illustrates integral top layer (1) or sheet and middle layer (2) or sheet containing the light diffusion polymer particles. Top layer (1) is a transparent acrylic sheet which may be colorized with a dye or a coloring agent such that the message (3) painted the back or formed in the middle layer (2) cannot be seen when the illuminating means (4) is not

2

activated and light rays (5) are not diffusing through middle layer (2) and top layer (1). The middle layer (2), as more fully described in EP-A-0269324 and 0342283 comprises thermoset or thermoplastic matrix polymer having light transmittance of not less than about 75% and preferably not less than about 80%, wherein the matrix contains light diffusing polymer particles as described in EP-A-0269324. The polymer particles in the matrix result in a translucent layered sheet that does not permit significant backscatter of the light rays.

In more detail EP-A-0269,324 describes particles of core/shell polymer having an average diameter of from 2 to 15 μm, a particle size distribution such that at least 90% by weight of the particles fall within ±20% of the average particle diameter, a core of rubbery alkyl acrylate polymer, the alkyl group having from 2 to 8 carbon atoms, copolymerised with 0 to 50% copolymerisable vinyl monomer, 0 or upto 5% crosslinker and 0 or upto 5% graftlinker (based on the total weight of the core) and having a refractive index ($n^{25}_D$) within 0.2 units of, but preferably no closer than ±0.003 to, the refractive index of the matrix polymer, and one or more polymer shells, the outer most of which is compatible with the matrix polymer, which shells comprise from 5 to 40% of the weight of the particles;

EP-A-0342283 describes other substantially spherical polymer particles having an average of from 2 to 15 micrometers and a particle size distribution such that at least 90% by weight of the particles fall within ± 20% of the average particle diameter. Other preferred compositions useful in the present invention should be obtained from the disclosures of said EP Applications.

These compositions provide light diffusing resins which combine excellent light diffusing properties with high light transmission. This combination of properties is possible because the resin does not significantly backscatter light. Also, the resins exhibit good contact clarity.

We have now found that this light diffusing resin performs surprisingly effectively when used in blankout signs for example as shown in Fig. III as described above.

The thickness of the multilayer blankout sign of the invention is preferably from 0.05 to 10 mm, preferably 1.0 to 10 mm and more preferably 3.0 to 5.0 mm.

The light transmittance of the translucent sheet having a thinness range of about 1.0 to 3.0 millimeter (about 1/32 inch to about 1/10 inch) is from about 75 to about 90%, preferably 80 to 90 and more preferably 80 to 85%. The light transmittance of two layer systems (translucent white with transparent bronze) of the multilayer blankout signs of the invention is given below in Example III, "Light Transmittance of Materials in Blankout Signs".

In the present invention, by the term "light transmittance" we mean the sum of light transmitted at all angles (total luminous transmittance) which can be obtained by measuring the intensity of light transmitted through a sheet when the sheet is irradiated with light.

Because of the contact clarity, the message of a blankout sign can be painted on the second (or back) surface of the light diffusing material (back painting step) which allows the use of a co-extruded layered sheet. The use of a co-extruded layered sheet offers a significant cost savings since only one sheet needs to be produced. Also, the light diffusing layered sheet is thermoformable or shapeable as a single layered sheet of material, which represents a simpler fabrication step.

The light diffusing layered sheet is also a good light diffuser. Therefore the second (or back) surface does not need to be fogged with paint. The light diffusing material used in the invention offers high light transmission. Therefore the sign will appear unusually bright when backlit, or an unusually low wattage illuminating source may be used to give a sign of standard brightness, offering energy savings. Alternatively, a denser transparent color could be used in the top layer material, giving a higher quality sign with the standard backlit brightness.

Since the light diffusing polymer particle sheet does not significantly backscatter light, the second surface color and/or message will be less obvious in bright ambient light with the light diffusing polymer particle sheet as used in the invention compared with known blankout signs; the light diffusing polymer particle sheet will also have better front and side hiding power of the second surface color and/or message when illuminating source is off. Also, blue colors appear very natural with this light diffusing polymer sheet since light is not backscattered (blue light is backscattered more than yellow or red light, and so blue tends to look washed out when projected through a backscattering resin medium).

This light diffusing polymer sheet can be dyed to any color currently available on the market, and can give a very natural and true appearance since backscattering is not significant. This allows for many color choices which can be combined in a blankout sign and thus gives more design freedom to the fabricator. Backscattering is responsible for poor color rendering from dye systems in many other types of diffusing systems.

In the light diffusing sheet, synthetic thermoset or thermoplastic resins are used as matrices. Examples of synthetic resins used include but are not to limited to polyolefinic resins such as polyethylene and polypropylene; olefin-vinyl acetate copolymers; resins of polyalkyl (meth)acrylates such as polymethyl (meth)acrylate; vinyl chloride resins; polyesters; polyamide resins such as nylons; polycarbonate; polystyrene; styrene-acrylonitrile, copolymer; polyvinylidene fluoride, and polysulfones. These resins may be used alone or in combination or as copolymers.

The foregoing synthetic resins may preferably have both heat resistance and impact resistance. It is possible to incorporate additives into the synthetic resins, such as heat distortion improvers, impact modifiers, ultraviolet absorbers, flame retardants, dyes, and the like.

The light diffusing polymer sheet is characterized in that a light diffusing agent is contained in a matrix composed of one or more the foregoing synthetic resins. As the light diffusing agent, particles of an organic polymeric compound are preferred because of their proper light transmittance and excellent light diffusion properties and specific examples thereof include alkyl (meth)acrylate type resins, monovinylarene type resins such as styrene type resins and vinyl carboxylate resins. These light diffusion agents may be homopolymers, copolymers or mixtures as well as multi-staged polymeric materials. Preferred are alkyl acrylate type resins and more preferably used are those comprising a core of such alkyl acrylate resins which are further covered with layers of the foregoing resins. Examples of the latter are particulate polymer compositions as disclosed in the EP Applications mentioned above.

The light diffusing agent particles used are in general substantially spherical in shape and their average particle size ranges from about 0.1 to about 500 microns. The term "average particle size" herein referred to that determined by a Nanosizer. Moreover, the particles preferably have a particle size distribution in which the particle size of at least 90% by weight of the particles falls within the range of the average particle size of ± 20%.

The refrative index

$$\left( n\, _{D}^{25} \right)$$

of the spherical light diffusing polymer particle will be within about ± 0.2 units, preferably within about ± 0.05 units, and still more preferably about ± 0.03, of the refractive index of the index of the matrix polymer. However, as an exact match between the refractive indices of the spherical polymer particles and matrix polymer will produce an almost completely transparent composition, the refractive index of the spherical index of the spherical polymer particles is preferably no closer than about ± 0.003 refractive index units to that of the matrix polymer.

The aforesaid light diffusing agent particles are incorporated into the foregoing synthetic resin (matrix) in an amount from 0.1 to 40% by weight. These spherical particles are preferably dispersed in the matrix uniformly whereby good light diffusion properties would be achieved.

Although preferred materials which comprise synthetic resins and light diffusing agents mixed and dispersed therein are polymer compositions as disclosed in the above mentioned Ep Applications, we have found, from further work, a narrower range of more preferred particle size distribution. This work was based on six large emulsion polymerization batches and used a laser diffraction method (Malvern 2600C). The average for all six batches showed a distribution range as follows:

90% of the total particle volume is less than 9.0 microns,

50 % of the total particle volume is less than 6.9 microns,

10% of the total particle volume is less than 3.5 microns, and

when the average particle size is 6.9 microns the spherical particle size range will be from about 5.5 to 8.3 microns.

More specifically, the polymer compositions comprise thermoplastic or thermoset matrix polymers with polymer particles dispersed in the matrix in an amount from 0.1 to 40% by weight on the basis of the total weight of the composition. The polymer particles have an average particle size from 1 to 15 microns. It is particularly important for desired light diffusing action that the particle size distribution in which the particle size of at least 90% by weight of the particles falls within the range of the average particle size ± 20% and that the particles be substantially spherical in shape. When the polymer composition is a light scattering composition based on a thermoplastic polymer matrix where the spherical polymer particles constitute 0.1 to 10% by weight of the total weight of the composition, particularly preferred spherical polymer particles are core / shell polymer particles composed of a core of a rubber-like alkyl acrylate polymer (wherein the alkyl group has 2 to 8 carbon atoms) which is copolymerized with 0 to 50% copolymerisable vinyl monomer, 0 or up to 5% of a cross-linking agent and 0 or up to 5% of a graft linker (the amount is based on the total weight of the core) and whose refractive index

$$\left( n\, _{D}^{25} \right)$$

is different from that of the matrix polymer by at least ± 0.003, but not by more than ± 0.2. At least one polymer shell of the light diffusing particles, preferably the outermost layer will be compatible with the matrix polymer and the shell(s) constitute 5 to 40% of the weight of the light diffusing particles.

The particles of the light diffusing agent may be mixed with and dispersed in the synthetic resin according to any known manner, for instance, by: (1) kneading a synthetic resin and a light diffusing agent in an extruder and then forming the mixture into a sheet body; (2) forming a sheet according to a cospray method; and (3) (as disclosed in U.S.-A-3,751,527) mixing an emulsion type synthetic resin and a light diffusing agent, coagulating both utilizing coagulant and then molding. It is also possible to incorporate heat distortion modifiers, impact modifiers, ultraviolet stabilizers, flame retardants, dyes, and the like into the sheet body as needed.

For comparative purpose of physical properties with a conventional acrylic sheet, the light diffusing polymer sheet used in the present invention is compared to Oroglas W-2447 (Rohm and Haas trademark), a standard material which is commonly used for blankout signs. At 3 mm thickness, Oroglas W-2447 has only 53% of total light transmission. By contrast the light diffusing polymer sheet used in this invention has at least 75% of total light transmission.

Since the light diffuser particles used in each material absorb little visible light, the difference in light transmission must be attributed primarily to backscattering caused by the particles of the light diffusing agent. This means that Oroglas W-2447 is backscattering more than twice as much incident light as the light diffusing polymer sheet (since the theoretical maximum of light transmission is 92%). This backscattering of light causes poor front-side hiding of the message during the day and a dimmer sign when backlit at night.

Because the light diffusing polymer sheet does act as a diffuser, any reflected light from paint applied to the back surface will be diffused and less visible compared to Oroglas W-2447 which must be front-painted. Also, because the light diffusing polymer sheet does not significantly backscatter light, there is less of a dependence on thickness of the polymer sheets versus light transmission. Therefore, during thermoforming, where corners and other deep draw areas often become thinner than the average flat parts of the sheet, differences in brightness over the contoured sheet will not be as readily observed with the light diffusing polymer sheet.

As shown in Fig. III, a two-layered blankout sign of the present invention is produced by a conventional co-extruder. The raw material of front sheet (layer 1) is an acrylic sheet dyed with blue color and that of the second sheet (middle layer 2) is the light diffusing material.

Therefore, a multilayer blankout sign using a translucent sheet, which is placed behind a transparent bronze overlay, said translucent sheet with a thickness of about 0.1 - 5 mm (or from about 1/32 of an inch to about 1/4 inch) comprising a synthetic resin matrix containing the light diffusing polymer particles and having 80% or more of light transmittance, can be produced in accord with this invention.

In summary, the use of this new light diffusing material in blankout signs offers the following advantages over existing technology.

1. Higher light transmission (brighter sign and/or energy savings).
2. Ability to backpaint due to contact clarity.
3. Good lamp hiding power without the need to fog the back of the middle layer with paint (one less fabrication step, and cost savings).
4. Less backscattered light (better front-side hiding when lamp is off, and more intense blue end colors).
5. Available as a co-extruded sheet which can be backpainted (cost saving in sheet production, and thermoformable or shapeable as a single part).
6. Material can be dyed or pigmented to any color and give a good appearance (color freedom in sign design).

I. (1) EXAMPLE OF PREPARING LIGHT DIFFUSING POLYMER PARTICLES

Step A

First, the following aqueous mixtures (A, B, C, D) were prepared.

| Components | Amount (pbw)* |
|---|---|
| **Mixture A** | |
| Water | 162 |
| Potassium carbonate | 0.12 |
| | |
| **Mixture B** | |
| Butyl acrylate | 66 |
| Styrene | 15 |
| n-Octoyl mercaptan | 19 |
| 10% Aqueous solution of sodium dodecylbenzene-sulfonate/ | 5.3 |
| water | 19 |
| | |
| **Mixture C** | |
| Potassium persulfate | 0.014 |
| Water | 1.4 |
| | |
| **Mixture D** | |
| Potassium persulfate | 0.055 |
| Water | 8.3 |

*The abbreviation "pbw" means "parts by weight".

Mixture A was charged into a reactor provided with a stirrer and a condenser and blanketed with nitrogen gas and heated to 87° C.

To the stirred reactor contents there were added 7% of the mixture B and all of the mixture C and the contents were stirred for 30 minutes Thereafter, the remaining mixture B and the mixture D were added to the reactor contents over a period of 90 minutes with stirring. The contents of the reactor were maintained at 87° C for 50 minutes with stirring, then the resultant polymer emulsion (of step A) was cooled to room temperature.

The particle size of the resultant polymer (butyl acrylate-styrene copolymer) particles was found to be about 0.3 micron.

Step B.

Furthermore, the following aqueous mixtures were prepared:

| Components | Amount (pbw)* |
|---|---|
| **Mixture A** | |
| Butyl acrylate | 98 |

|                          |        |
|--------------------------|--------|
| Butylene glycol diacrylate | 0.50 |
| Alkyl methacrylate       | 2.0    |
| Benzoyl peroxide         | 0.80   |

Mixture B

|                                |       |
|--------------------------------|-------|
| Magnesium p-nitrosophenolate   | 0.011 |
| Water                          | 226   |
| 10% Aqueous solution of sodium dodecylbenzenesulfonate | 3.1 |

Mixture C

|                                |     |
|--------------------------------|-----|
| The polymer emulsion of (Step A) prepared above | 1.5 |

\* The abbreviation "pbw" means "part by weight".

The Mixtures A and B were admixed with each other in a Waring Blender for 3 minutes to obtain an emulsion. This emulsion was introduced into a pressure reactor to which the Mixture C (emulsion polymer from Step A) had been charged and the contents of the reactor were stirred for one hour under a nitrogen blanket. The reactor was sealed, was shaken at 68° C for 3 hours in a water bath and then cooled to room temperature. The resultant second stage polymer particles had a particle size of about 2 microns.

Step C.

The procedure of aforementioned Step B was repeated, except that Mixture C (emulsion polymer from Step A) was 23 parts by weight of the particle dispersion produced in Step B. The resulting third stage particles had a diameter of approximately 5 microns.

Step D.

The following aqueous mixture was prepared:

| Components | Amount (pbw) |
|------------|--------------|
| **Mixture A** | |
| Particle dispersion from Step C | 1348 |
| **Mixture B** | |
| Methyl methacrylate | 96 |
| Ethyl acrylate | 4.0 |
| **Mixture C** | |
| 3% Aqueous sodium formaldehyde sulfoxylate | 10 |
| 10% Aqueous sodium dodecylbenzenesulfonate | 1.5 |
| Water | 53 |
| **Mixture D** | |
| t-Butyl hydroperoxide | 0.45 |
| Water | 14 |

7

Mixture A (particle emulsion made in Step C) was weighed into a reactor equipped with a stirrer and a condenser and blanketed with nitrogen. The reactor contents were heated to 65° C and stirred under the nitrogen blanket. Mixtures B, C and D were separately added to the reactor over a period of 90 minutes. The temperature was maintained at 65° C and stirring was continued for 30 minutes, after which the reactor contents were cooled to room temperature. The resulting particles were about 5 microns in diameter, with less than about 20% of the number of particles between 2 and 4 microns and a very small number of particles were below 0.5 micron.

The light diffusing polymer particles agent (multi-stage polymer) thus prepared has a refractive index

$$\left( n_D^{25} \right)$$

of 1.46.

## (2) PREPARATION OF A LIGHT DIFFUSING RESIN COMPOSITION

The light diffusing spherical particles agent obtained in (I) (above) was coagulated with a calcium hypophosphite coagulant to isolate it from an aqueous suspension and 10 parts by weight of the light diffusing agent was melt-blended at 232° C with 90 parts by weight of poly(methyl) methacrylate, having a weight-average molecular weight of about 120,000. The poly (methyl methacrylate) (Oroglas) is the matrix into which the light diffusing particles are suspended. A sheet prepared from this resin composition was translucent and exhibited excellent semitransparent hiding power with a luminous transmittance of about 80%.

The reactive index of poly(methyl methacrylate) used herein as the matrix for the surface layer was 1.49.

## II. EXAMPLE OF A PREPARING BLANKOUT SIGN USING THE LIGHT DIFFUSING RESIN COMPOSITION.

Using a standard co-extrusion arrangement a two layer sheet was co-extruded. The thickness of this sheet could be from 1 mm to 10 mm, but most typically will be in the thickness range of 3 to 5 mm or about 1/32 to about 1/10 of an inch. The top layer, or outer layer of the sign, consists of an acrylic extrusion grade resin (for example, Oroglas V-045 for an acrylic resin) with a bronze dye loading. This results in a first layer that is transparent bronze in color. This top layer typically would comprise 10 to 40% of the total sheet. A representative transparent bronze formulation which would be used in such an application would have a light transmission of about 30%.

The second layer (or bottom layer, or substrate layer) comprises typically 60 to 90% of the total sheet, and is composed of the light diffusing, translucent material from the light diffusing resin composition obtained according to I (2) above.

The sheet, after being cut to the proper size, may be thermoformed or shaped followed by backpainting of the message on the sheet, if desirable. An alternative method, which gives an interesting effect, is to backpaint and then thermoform or shape the part. The backpainting step uses paints which are standard to the sign industry along with standard painting equipment. The finished sign face is then framed into any type of standard sign housing used in the industry.

EXAMPLE III:

## LIGHT TRANSMITTANCE OF MATERIALS IN BLANKOUT SIGNS

The following data are useful in demonstrating that a blankout sign using Applicants' light diffusing resin composition from Example I (2) above (herein designated "Plexiglas L") as the translucent white layer will have an higher overall light transmission (% LT) as compared to a blankout sign using a standard acrylic translucent white material.

A. ONE LAYER SYSTEMS

| Translucent White Materials 0.3175 cm (0.125 inches) thick: | %LT(measured) |
|---|---|
| Plexiglas L (10%) | 80.0 |
| Plexiglas W2447 | 59.8 |
| Plexiglas W7328 | 34.6 |

| Translucent Bronze Materials 0.3175 cm (0.125 inches) thick: | %LT (measured) |
|---|---|
| Plexiglas 2307 | 11.1 |
| Plexiglas 2412 | 36.0 |
| Plexiglas 2404 | 50.8 |

"Plexiglas" is the trademark used by Rohm and Haas Company in United States, Canada and many Latin American countries for its crylic sheet products. In Europe and Asia however this trademark is not used; the trademark Oroglas is used instead.

B. TWO LAYER SYSTEMS

Light Transmission measurements of two layer systems (B. Transparent Bronze Material over A. Translucent White Material) such as those of the present blankout sign invention were made. The translucent white material was closest to the light source, as it would be in a blankout sign. The transparent bronze material 0.3175 cm(0.125 inches thick) was placed on top of the translucent white material 0.3175 cm (0.125 inches thick), and then the two layer sample thickness of 0.635 cm (0.250 inches) was measured for light transmittance (%LT).

| A. Translucent White Material | B. Transparent Bronze Material | Two Layer Sample % LT Measured |
|---|---|---|
| Plexiglas L (10%) | Bronze - 2370 | 5.6 |
| Plexiglas L (10%) | Bronze - 2412 | 20.1 |
| Plexiglas L (10%) | Bronze - 2404 | 29.0 |
| Plexiglas W2447 | Bronze - 2370 | 4.0 |
| Plexiglas W2447 | Bronze - 2412 | 14.5 |
| Plexiglas W2447 | Bronze - 2404 | 21.1 |
| Plexiglas W7328 | Bronze - 2370 | 2.3 |
| Plexiglas W7328 | Bronze - 2412 | 8.3 |
| Plexiglas W7328 | Bronze - 2404 | 12.1 |

Definitions:

- Plexiglas L (10%) - ten percent of light diffusing particles in standard acrylic sheet (see Example I, and specifically Example I(2))

- Plexiglas W2447 - crosslinked polystyrene particles in standard acrylic sheet

- Plexiglas W7328 - with $TiO_2$ as a component

- Plexiglas 2370 - Plexiglas 2412 - Plexiglas 2404 - commercially available standard bronze acrylic sheet having dye systems

- "Light transmittance" means the sum of light transmittance at all angles (total luminous transmittance) which can be obtained by measuring the intensity of light transmitting through a sheet when the sheet is irradiated with light. "% LT" means percent light transmittance. Measured % LT values were determined using a standard Hunter Tristimulus Colorimeter.

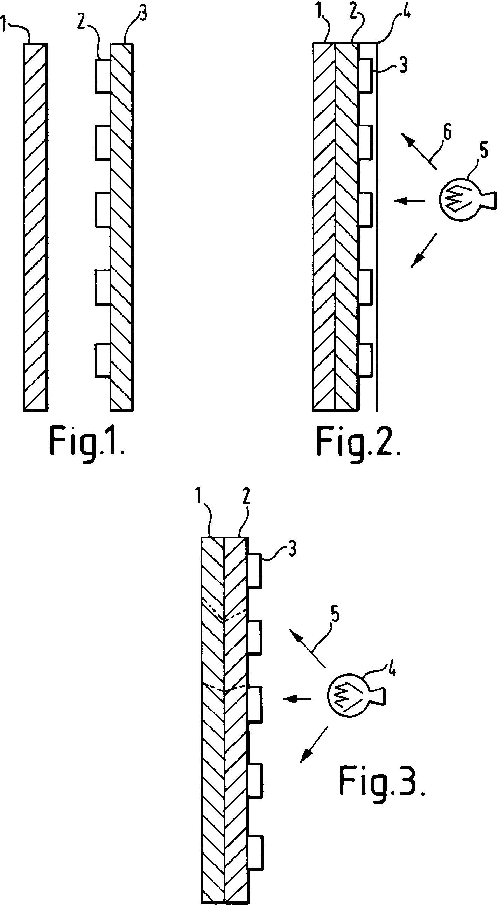

**Claims**

1. A multilayer blankout sign comprising a translucent sheet placed behind a transparent overlay, said translucent sheet comprising synthetic resin matrix containing light diffusing polymer particles and having 80% or more of light transmittance.

2. A sign as claimed in claim 1 wherein the translucent sheet is at least 0.1 mm. thick.

3. A sign as claimed in claim 1 or 2 wherein the light diffusing polymer particles are substantially spherical and have an average particle diameter of from 2 to 15 microns and a size distribution such that 90% by weight of the particles are within ± 20% of the average particle diameter.

4. A sign as claimed in any preceding claim wherein the synthetic resin matrix comprises thermoplastic or thermoset polymer and, distributed throughout the polymer, is from 0.1 % to 40% (of the total composition weight) of substantially spherical polymer particles.

5. A sign as claimed in any preceding claim wherein the light diffusing polymer particles comprise rubbery alkyl acrylate copolymer, the alkyl group having from 2 to 8 carbon atoms.

6. A sign as claimed in claim 5 wherein the alkyl acrylate copolymer comprises units of alkyl acrylate and of one or more copolymerizable monovinyl monomer selected from alkyl methacrylates and vinyl arenes, preferably styrene.

7. A sign as claimed in claim 5 or 6 wherein the alkyl acrylate copolymer particle is surrounded by one or more shells, the outer of which is compatible with the matrix polymer, and which shell(s) comprise(s) from 0.1 to 40% of the weight of the particles.

8. A sign as claimed in any preceding claim wherein the light diffusivity of the polymer particles is higher than that of the matrix polymer and the polymer particles have a refractive index within $\pm$ 0.2 units of, but no closer than $\pm$ 0.003 units to, the refractive index of the synthetic resin matrix.

9. A sign as claimed in claim 8 wherein the refractive index of the particles is within $\pm$ 0.03 units of the refractive index of the matrix polymer.

10. A sign as claimed in any preceding claim wherein from 0.1% to 10% (of total composition weight) of the light diffusing polymer particles is distributed throughout the synthetic resin matrix polymer.

Fig.1.

Fig.2.

Fig.3.